# EUROPÄISCHE PATENTSCHRIFT

(11) **EP 2 728 228 B1**
(45) Veröffentlichungstag und Bekanntmachung des Hinweises auf die Patenterteilung: **17.06.2015**
(21) Anmeldenummer: 12191299.2
(22) Anmeldetag: 05.11.2012
(51) Int. Cl.: F16K 17/06, F16K 17/26, F17C 13/04, G05D 16/10

(54) **Sperrventil für einen Druckspeicherbehälter**
Sealing valve for a pressure storage container
Clapet antiretour pour un réservoir d'accumulation de pression

(43) Veröffentlichungstag der Anmeldung: 07.05.2014
(73) Patentinhaber: Magna Steyr Fahrzeugtechnik AG & Co KG, 8041 Graz (AT)
(72) Erfinder: Mayr, Franz, 8323 St.Marein bei Graz (AT); Scheinost, Armin, 8020 Graz (AT)
(74) Vertreter: Zangger, Bernd

(56) Entgegenhaltungen:
- WO-A1-2012/137424
- DE-A1- 10 312 672
- JP-A- 2006 146 776
- JP-A- 2008 299 766
- US-A1- 2004 231 727

## Beschreibung

### Gebiet der Erfindung

Die vorliegende Erfindung betrifft ein Sperrventil für einen Druckspeicherbehälter für ein Medium sowie ein Druckspeichersystem für ein Fahrzeug.

### Stand der Technik

Derartige Vorrichtungen können beispielsweise in Form von Einzelventilen oder als Ventilkombinationen im Einlassbereich von Tanks oder Tanksystemen von Kraftfahrzeugen eingesetzt werden, um bei einem Tank- oder Befüllvorgang ein Überfüllen des Druckspeicherbehälters mit Kraftstoff zu verhindern.

Ein Sperrventil ist aus der US 3,709,241 bekannt. Bei diesem Ventil ist zur Begrenzung des Fülldrucks in einem Tank ein Kolben in einer Bohrung eines Ventilkörpers geführt. Der Kolben weist ein elastisches Dichtelement auf und wird durch eine Feder gegen eine verengte Einlassöffnung gedrückt. Zwischen der Bohrung des Ventilkörpers und dem Kolben ist ein Spalt vorgesehen, durch den Gas vom Auslassbereich des Ventils in einen Bereich der Bohrung hinter dem Kolben gelangen kann, sodass der Druck im Auslassbereich eine axiale Kraft auf den Kolben ausübt und so die Feder beim Schließen der Einlassöffnung unterstützt. So wird verhindert, dass Gas vom Auslassbereich zurück zur Einlassöffnung strömt und gleichzeitig wird verhindert, dass der Fülldruck einen vorbestimmten Wert übersteigt.

Außerdem ist bekannt, dass ein Fülldruck eines Druckspeicherbehälters oder eines Druckspeichersystems durch Messung des Druckes und durch elektronische Steuerung elektrischer Ventile kontrolliert und begrenzt werden kann.

Sperrventile sind außerdem bekannt aus US 2004/231727 A1, WO 2012/137424 A1, JP 2006 146776 A und JP 2008 299766 A.

Bei den genannten Anwendungen ist es erwünscht, dass ein zulässiger Betriebsdruck eines Druckspeicherbehälters oder eines Druckspeichersystems im Verlauf eines Befüllvorganges zuverlässig eingehalten und so höchste Betriebssicherheit gewährleistet wird. Der Befüllvorgang soll möglichst schnell und mit nur geringen Energieverlusten durchführbar sein. Verschleiß an Ventilkomponenten soll gering gehalten und Beschädigungen an Druckspeicherbehältern und Druckleitungen sollen verhindert werden.

Es ist eine Aufgabe der Erfindung, Sperrventile der genannten Art in dieser Hinsicht zu verbessern und insbesondere ein Sperrventil anzugeben, das dauerhaft einem Druckspeicherbehälter zugeordnet ist und das ohne elektrische und elektronische Komponenten funktioniert.

Es ist außerdem eine Aufgabe der Erfindung verbesserte Druckspeichersysteme mit erhöhter Betriebssicherheit zu ermöglichen.

### Zusammenfassung der Erfindung

Die Lösung der Aufgabe erfolgt durch ein Sperrventil für einen Druckspeicherbehälter für ein Medium, wobei das Sperrventil ein Ventilgehäuse, eine Ventilkammer mit einer Zulauföffnung und einer dem Druckspeicherbehälter zugewandten Auslassöffnung, einen beweglichen Kolben, und zumindest eine Feder aufweist, wobei der Kolben zumindest einen axialen Verbindungskanal aufweist und durch zumindest zwei in der Ventilkammer angeordnete Dichtelemente axial beweglich geführt ist, wobei eine einem Einlassbereich der Ventilkammer zugewandte erste Kolbenwirkfläche des Kolbens und ein Dichtkörper oder das Ventilgehäuse einen Ventilsitz bilden, und wobei durch Änderung des Druckes in einem an eine zweite Kolbenwirkfläche angrenzenden Speicherbereich der Ventilkammer der Kolben axial bewegbar ist und eine zwischen der Zulauföffnung und der Auslassöffnung angeordnete Durchlassöffnung reversibel verschlossen und geöffnet werden kann, wobei die Durchlassöffnung in drucklosem Zustand durch die Feder offen gehalten wird, wobei die erste Kolbenwirkfläche und der Dichtkörper so ausgebildet sind, dass in einer Schließposition des Kolbens eine Dichtwirkung an einer Dichtkante im Bereich des äußeren Randes der ersten Kolbenwirkfläche auftritt, wobei die Zulauföffnung radial außerhalb der Kolbenwirkfläche in den Einlassbereich der Ventilkammer mündet.

Es resultiert ein rein mechanisches Sperrventil, das aufgrund einer eingestellten Federkraft ab einem bestimmten Druck die Durchlassöffnung dicht verschließt und weder bei weiterer Druckzunahme oder Druckabnahme bis Unterdruck in der Zulauföffnung öffnet und somit immer verschlossen bleibt. Die Entnahme von Medium erfolgt an einer oder mehreren anderen Stellen im Druckspeichersystem.

Der erfinderische Vorteil dieses mechanischen Sperrventils liegt darin, dass ein nachgeschaltetes Druckspeichersystem nur den Druck erreicht der gewünscht ist und unabhängig vom Druck vor dem Sperrventil und ohne einen elektrischen Aktuator das Sperrventil immer sicher verschlossen bleibt und somit den Druck im nachgeschalteten Druckspeichersystem einerseits sicher hält und eine weitere Druckzunahme durch nachströmendes Medium nicht zulässt. Ein weiterer Vorteil dieser Ventilausführung liegt darin, dass zwar bei Undichtigkeiten am Dichtsitz zwischen Kolben und Dichtkörper das nachgeschaltete Druckspeichersystem einer nicht gewünschten Druckerhöhung ausgesetzt sein kann, wobei mit Zunahme des Druckes auf der Auslassseite die Anpresskraft des Kolbens auf den Dichtkörper zunimmt und somit die Undichtigkeit wieder verringert wird.

Besonders vorteilhaft wirkt sich aus, dass die Durchlassöffnung in drucklosem Zustand durch die Kraft der Feder offen gehalten wird. So kann das Medium bis zur Schlussphase des Tankvorganges ungehindert in den Druckspeicherbehälter strömen und schädliche Vibrationen im Bereich der Ventilkammer werden vermieden.

Das erfindungsgemäße Sperrventil ist für unterschiedliche Medien wie Wasserstoff, Methan, Erdgas oder ein Gemisch aus Wasserstoff und Erdgas besonders geeignet. Durch entsprechende Modifikationen ist auch eine Verwendung mit Flüssig-Gas (LPG) und anderen flüssigen Medien möglich.

Die Lösung der Aufgabe erfolgt außerdem durch ein Druckspeichersystem für ein Fahrzeug, umfassend zumindest einen Druckspeicherbehälter und zumindest ein damit wirkverbundenes Sperrventil.

Unter Verwendung des erfindungsgemäßen Sperrventils, allein und auch in Kombination mit elektrischen Ventilen, können mehrere Druckspeicherbehälter mit unterschiedlichem zulässigem Betriebsdruck derart verbunden werden, dass diejenigen Druckspeicherbehälter, die einen niedrigeren zulässigen Betriebsdruck aufweisen als ein üblicher oder für das ganze System vorgesehener (höherer) Fülldruck, ein auf den jeweiligen zulässigen Betriebsdruck des jeweiligen Druckspeicherbehälters abgestimmtes Sperrventil vorgeschaltet haben, um den jeweiligen Druckspeicherbehälter vor Übertankung zu schützen.

Dies dient der Erhöhung der Sicherheit gegen Überfüllung beim Betanken und ermöglicht die Anwendung von zusätzlichen kostengünstigeren Druckspeicherbehältern mit niedrigeren zulässigen Druckniveaus. Dadurch wird es aber auch möglich, zu einem bestehenden System kostengünstig mit einem Zusatzsystem und höherem Druckniveau die Speicherkapazität eines vorhandenen Druckspeichersystems massiv zu erhöhen.

Weiterbildungen der Erfindung sind in den abhängigen Ansprüchen, der Beschreibung sowie den beigefügten Zeichnungen angegeben.

Die erste Kolbenwirkfläche und der Dichtkörper sind so ausgebildet, dass in einer Schließposition des Kolbens eine Dichtwirkung an einer Dichtkante im Bereich des äußeren Randes der ersten Kolbenwirkfläche auftritt.

Äußerer Rand bedeutet hier, von der Achse des Kolbens betrachtet, radial außen liegend. Der äußere Rand des Kolbens kann beispielsweise im Bereich der ersten Kolbenwirkfläche schräg gefast oder abgerundet sein. Auch kann die erste Kolbenwirkfläche am äußeren Rand einen erhöhten Wulst aufweisen, um die Dichtwirkung in diesem Bereich zu lokalisieren.

Dadurch wird bei Überschreiten eines Sperrdrucks bzw. bei Anstieg des Druckes über den Sperrdruck auf den Kolben keine Kraft mehr gegen die Schließrichtung des Kolbens ausgeübt. Der Sperrdruck und das Schließverhalten des erfindungsgemäßen Sperrventils werden somit unabhängig vom Druck in der Zulauföffnung. Außerdem kann bei geschlossenem Ventil auch bei einem Druckanstieg in der Zulauföffnung durch den Druck in der Zulauföffnung keine axiale Kraft auf den Kolben ausgeübt werden und das Sperrventil bleibt auch bei extremen Druckstößen sicher geschlossen.

Es wird außerdem sichergestellt, dass das Drucksperrventil auch dann geschlossen bleibt, wenn der Druck in der Zulauföffnung unter den Sperrdruck absinkt, bei dem der Kolben zuvor geschlossen hat, da die nun fortwährende Schließkraft im Wesentlichen nur durch den Druck im Speicherbereich der Ventilkammer auf die Kolbenwirkfläche abzüglich der Federkraft der Feder bestimmt wird.

Dadurch, dass die Zulauföffnung radial außerhalb der Kolbenwirkfläche in den Einlassbereich der Ventilkammer mündet, wird zusätzlich sichergestellt, dass durch den Druck in der Zulauföffnung keine axiale Kraft auf den Kolben ausgeübt werden kann.

Vorzugsweise ist die zweite Kolbenwirkfläche grösser ausgebildet als die erste Kolbenwirkfläche. Durch eine relativ größere zweite Kolbenwirkfläche ist es möglich kleinere Werte für den Sperrdruck des Sperrventils zu realisieren.

Besonders bevorzugt ist der Kolben zylindrisch und weist an seiner Außenseite Gleitflächen in zumindest zwei Bereichen mit vorzugsweise unterschiedlichen Durchmessern auf.

Besonders bevorzugt sind die zumindest zwei Dichtelemente in entsprechenden Ausnehmungen im Ventilgehäuse angeordnet. Die kostengünstigste Variante wäre, die Dichtelemente in jeweils einer Nut im Kolben unterzubringen. In Nuten auf dem Kolben angeordnete Dichtelemente erweisen sich bei sehr hohen Drucken (200 bis 1000 Bar) als problematisch. In Abhängigkeit des Druckes wird eine variable Kraft auf den Kolben ausgeübt und beeinflusst daher den Sperrdruck des Sperrventils. Durch die vorzugsweise Anordnung der Dichtungen in Ausnehmungen oder Nuten im Ventilgehäuse, insbesondere in zylindrischen Abschnitten der Ventilkammer erfolgt keine variable Krafteinwirkung auf den Kolben durch den Druck des Mediums - das Sperrventil bleibt zuverlässig geschlossen.

Der Dichtkörper und/oder der Kolben sind vorzugsweise aus einem elastisch verformbaren Material hergestellt. Durch eine den sehr hohen Drucken (200 bis 1000 Bar) angepasste Materialwahl wird die Dichtwirkung optimiert und Verschleiß am Ventilsitz vermieden. Besonders geeignete Materialien umfassen Kunststoffe wie PEEK und PAS oder keramische Werkstoffe wie Aluminiumoxid und Siliziumcarbid, aber auch Spezialstähle und andere Metalle. Das Sperrventil muss keinen separaten Dichtkörper aufweisen. Möglich ist auch, dass der Kolben direkt gegen das Ventilgehäuse dichtet. Bevorzugte Materialkombinationen sind dem Fachmann geläufig.

Ein zwischen dem Einlassbereich und dem Speicherbereich der Ventilkammer angeordneter Entlastungsbereich der Ventilkammer weist vorzugsweise zwischen den zumindest zwei Dichtelementen eine Entlastungsöffnung auf. Dadurch kann bei Undichtigkeiten an einem der Dichtelemente austretendes Medium nicht zu einer Druckerhöhung im jeweils anderen Bereich der Ventilkammer führen. Weiters sorgt der Entlastungsbereich für einen Druckausgleich beim Verschieben des Kolbens, sodass schnelle Kolbenbewegungen und somit kurze Reaktionszeiten des Sperrventils möglich werden.

Gemäß einer besonders bevorzugten Ausführungsform der Erfindung ist die Entlastungsöffnung mit einer Leitung zur Entsorgung von austretendem Medium verbunden. Dadurch kann gegebenenfalls austretendes (brennbares) Medium aus der unmittelbaren Umgebung des Sperrventils abtransportiert und an einer geeigneten Stelle ohne Gefahr für Fahrzeuginsassen bei niedrigem Druck weiterbehandelt werden.

In einer bevorzugten Ausführungsform ist der Sperrdruck des Sperrventils im Wesentlichen durch die Federkraft der Feder und die Kolbenwirkflächen bestimmt. Die Federkraft der Feder wird in Abstimmung mit den Kolbenwirkflächen so bemessen, dass bei ansteigendem Druck im Speicherbereich nach Überschreitung eines vorbestimmten Sperrdruckes das Sperrventil zuverlässig schließt und verschlossen bleibt. Die Reibung an den Dichtelementen spielt ebenfalls eine Rolle in der Bemessung der Federkraft.

In einer Ausführungsform ist die Federkraft der Feder über die Einschraubtiefe eines Deckels einstellbar. Dadurch können beispielsweise beim Zusammenbau Toleranzen der Federkraft und/oder Unterschiede in der Reibung zwischen Kolben und Dichtelementen, etwa bewirkt durch Fertigungstoleranzen, ausgeglichen werden.

In einer weiteren Ausführungsform des Sperrventils sind Distanzhalter am Deckel des Ventilgehäuses oder entsprechende Freistellungen an der zweiten Kolbenwirkfläche des Kolbens vorgesehen. Dadurch wird eine gute Druckverteilung auf die zweite Kolbenwirkfläche des Kolbens erreicht. Weiters erreicht man dadurch ein beschleunigtes Schließen des Kolbens durch zusätzliche Wirkung der Druckkraft auf die zweite Kolbenwirkfläche, die erst wirkt, wenn sich der Kolben aus der Ausgangslage bewegt. Diese Ausführung beschleunigt das Schließen des Kolbens auch bei sehr geringem Gradienten des Fülldruckes.

Günstig ist auch, wenn das Ventilgehäuse an dem die Auslassöffnung aufweisenden Ende zumindest teilweise in eine Öffnung des Druckspeicherbehälters hineinragt und so dauerhaft mit dem Druckspeicherbehälter verbunden ist. In dieser Ausführungsform ist das Sperrventil platzsparend und vor mechanischer Krafteinwirkung geschützt im Inneren eines Druckspeicherbehälters angeordnet. Alternativ dazu kann die Auslassöffnung über eine Druckleitung dauerhaft mit dem Druckspeicherbehälter verbunden sein. Dadurch wird die Einbaulage des Sperrventils, beispielsweise in einem Tankstutzen, weitgehend unabhängig von der Einbaulage des Druckspeicherbehälters.

In einer weiteren Ausführungsform des erfindungsgemäßen Sperrventils ist die Auslassöffnung über einen Ventilaufnahmeblock oder über einen zumindest ein zusätzliches Ventil aufweisenden Speicherventilblock mit dem Druckspeicherbehälter verbindbar angeordnet. Speicherventilblöcke sind im Stand der Technik bekannt und sind bauliche Einheiten, die mehrere Ventilfunktionen in einem kompakten Gehäuse vereinigen und fest mit einer Öffnung eines Druckspeicherbehälters verbindbar sind. Dadurch wird die zum Schutz vor Überfüllung dienende Sperrfunktion des Sperrventils modular und platzsparend um weitere Funktionen erweiterbar.

In einer weiteren bevorzugten Ausführungsform des Sperrventils ist zwischen dem Speicherbereich und dem Entlastungsbereich der Ventilkammer ein Überdruckventil angeordnet, dessen Öffnungsdruck über dem Sperrdruck des Drucksperrventiles liegt. Dadurch wird die Betriebssicherheit des Druckspeichersystems erhöht. Da das Sperrventil ja verschlossen bleibt, würde eine zum Beispiel durch einen Brand verursachte Überhitzung des Mediums und ein damit verursachter Druckanstieg im Druckspeicherbehälter ohne ein derartiges Überdruckventil eine Zerstörung des Druckspeicherbehälters bedeuten. Besonders bevorzugt ist eine Kombination von Sperrventil und Überdruckventil in einem gemeinsamen Ventilgehäuse.

Die Bezeichnung Fahrzeug umfasst in dieser Patentschrift beispielsweise Kraftfahrzeuge, Schienenfahrzeuge, sowie Wasser- und Luftfahrzeuge.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer Ausführungsform des erfindungsgemäßen Sperrventils.
- Fig. 2: ist eine Schnittansicht einer Ausführungsform eines Kolbens für ein erfindungsgemäßes Sperrventil.
- Fig. 3: ist eine schematische Darstellung einer Tankvorrichtung für ein Fahrzeug mit einem Sperrventil und einem Druckspeicherbehälter.
- Fig. 4: ist eine schematische Darstellung einer Vorrichtung zum Betanken eines Fahrzeugs an einer Tankstelle mit 700 bar Zapfdruck, beinhaltend ein Druckspeichersystem mit zwei Druckbehältern mit unterschiedlichem zulässigem Betriebsdruck.
- Fig. 5: ist eine schematische Darstellung einer weiteren Vorrichtung zum Betanken eines Fahrzeugs an einer Tankstelle mit 700 bar Zapfdruck, beinhaltend ein Druckspeichersystem mit zwei Druckbehältern mit unterschiedlichem zulässigem Betriebsdruck.

### Detaillierte Beschreibung der Erfindung

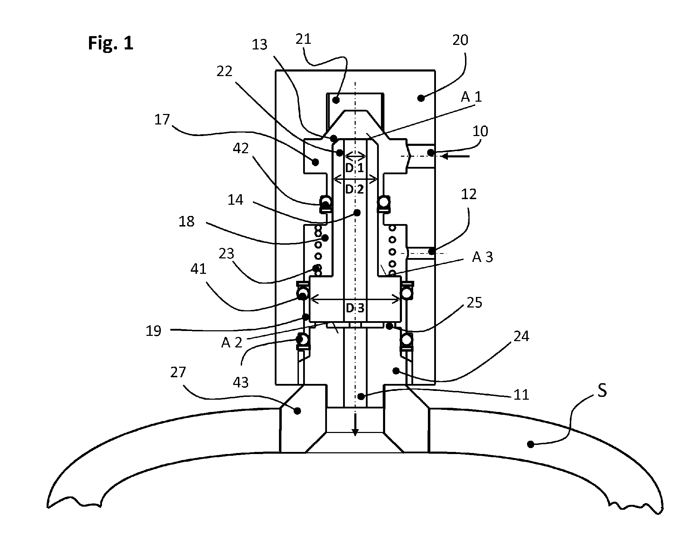

In der in Figur 1 gezeigten, beispielhaften Ausführungsform ist das Sperrventil erfindungsgemäß über einen Ventilaufnahmeblock 27 in einer Öffnung eines Druckspeicherbehälters S angeordnet. In einem Ventilgehäuse 20 ist ein Kolben 22 montiert, der zwei Abschnitte mit unterschiedlichen Außendurchmessern D2, D3 und einen als zentrale Hohlbohrung ausgeführten Verbindungskanal 14 mit dem Innendurchmesser D 1 aufweist. Der Kolben 22 stützt sich am Übergang zum größeren Außendurchmesser D3 über die Auflage A3 durch eine Feder 23 am Ventilgehäuse 20 ab, wodurch der Kolben 22 auf Anschlag zum Deckel 24 und dadurch in einem drucklosen Einbauzustand die Durchlassöffnung 13 in geöffneter Stellung gehalten wird.

Der Kolben 22 wird in den beiden Abschnitten mit unterschiedlichen Außendurchmessern D2,D3 von Dichtelementen 41,42 so abgedichtet, dass der Raum mit der Feder 23 zwischen diesen Dichtungen frei durch die Ventilationsöffnung 12 zum Atmosphärendruck atmen kann. Die Dichtelemente 41,42 können wahlweise im Kolben 22 oder wie dargestellt im Ventilgehäuse 20 montiert sein. Die Dichtung 43 dichtet den einstellbaren Deckel 24 gegen das Ventilgehäuse 20 ab.

Bei einem Befüllvorgang, zum Beispiel eines an der Auslassöffnung 11 angeordneten Druckspeicherbehälters, kann Medium durch die Zulauföffnung 10 im Einlassbereich 17 der Ventilkammer über die Durchlassöffnung 13 und durch den Verbindungskanal 14 in den Speicherbereich 19 der Ventilkammer, und in der Folge durch die Auslassöffnung 11 in den nachfolgenden Druckspeicherbehälter S gelangen. Wenn der Druck im gesamten Druckspeichersystem so weit ansteigt, dass aufgrund der Kraftverhältnisse durch den anliegenden Druck auf die Kolbenwirkflächen A2 und A1 der Kolben 22 die Federkraft der Feder 23 überwindet, wird der Kolben 22 gegen den Dichtkörper 21 geschoben. Das Sperrventil schließt. Dieser Druck entspricht dem Sperrdruck.

Um keine weitere Druckkraft auf den Kolben zu bekommen, ist es daher von Vorteil, wenn der Kolben am äußeren Durchmesser D2 zum Dichtkörper 21 abdichtet. Bei einem Druckanstieg im Einlassbereich 17 bleibt das Sperrventil weiterhin geschlossen, da auf die erste Kolbenwirkfläche A1 die Druckerhöhung nicht mehr wirkt. Wenn der Druck in der Einlassöffnung 10 unter den Druck absinkt bei dem der Kolben geschlossen hat, bleibt das Ventil trotzdem geschlossen, da die Schließkraft durch den Druck in der Auslassöffnung 11 auf die Kolbenwirkfläche A2, abzüglich der Federkraft der Feder 23, bestimmt wird und sich dieser Zustand nicht geändert hat. Somit ist es möglich, auf der Einlassseite 10 Unterdruck aufzubringen, ohne dass das Ventil öffnet. Die Federkraft der Feder 23 ist mit der Einschraubtiefe des Deckels 24 zusätzlich einstellbar.

Um eine gute Druckverteilung auf die zweite Kolbenwirkfläche A2 zu erhalten sind entweder Distanzhalter 25 am Deckel 24 oder entsprechende Freistellungen am Kolben darzustellen.

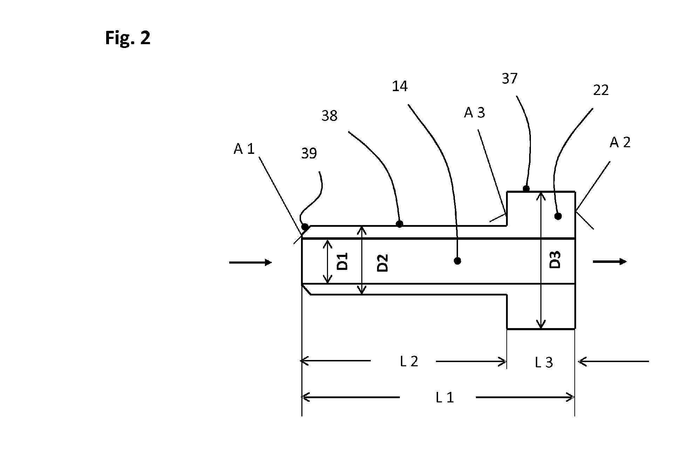

In Figur 2 ist ein Kolben 22 des erfindungsgemäßen Sperrventils exemplarisch im Detail dargestellt. Der zylindrische Kolben mit der Gesamtlänge L1 weist in der gezeigten Ausführungsform zwei Abschnitte mit unterschiedlichen Außendurchmessern D2 und D3 auf. Ein erster Kolbenabschnitt weist eine normal zur Achse des Kolbens 22 ausgebildete erste Kolbenwirkfläche A1, eine als Fase auf einer Kante des Kolbens ausgebildete Dichtkante 39 und eine erste Gleitfläche 38 mit der Länge L3 und einem Außendurchmesser D2 auf. Ein zweiter Kolbenabschnitt weist eine zweite Kolbenwirkfläche A2, eine Auflage A3 für die Feder 23 und eine zweite Gleitfläche 37 mit der Länge L3 und einem Außendurchmesser D3 auf. Der Verbindungskanal 14 ist als axiale Bohrung über die gesamte Länge L1 des Kolbens 22 ausgebildet und weist einen Innendurchmesser D 1 auf. Der Verbindungskanal 14 verbindet die zwei Kolbenwirkflächen A1,A2 und wird entsprechend der Ausführungsform des Ventilgehäuses 20 und dem Betriebszustand des Sperrventils von Medium durchströmt.

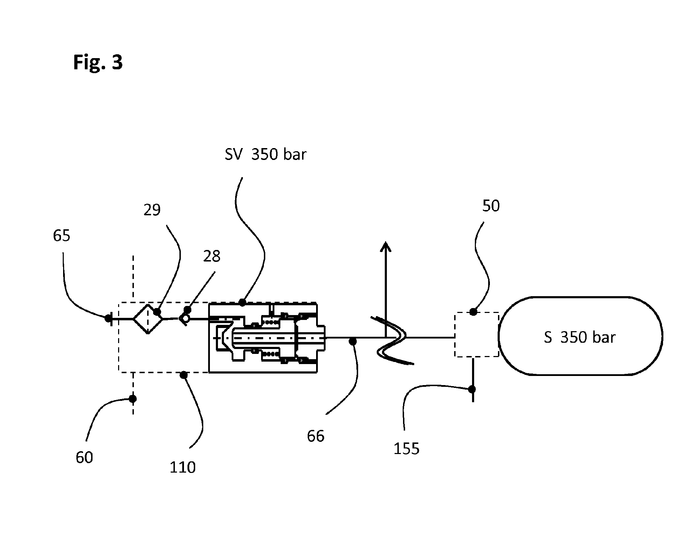

In Figur 3 ist eine beispielhafte Ausführungsform des Sperrventils SV (Sperrdruck 350 Bar) eingebaut in eine neuartige Tankstutzeneinheit 110 in einer Karosserie 60 eines Kraftfahrzeugs dargestellt. Ein Tankstutzen 65 (nach dem Stand der Technik) legt durch seine mechanischen Abmessungen (Länge, Durchmesser) fest, mit welcher Zapfpistole einer Tankstelle der Tankstutzen 65 verbindbar ist. Dadurch ist das Medium (hier Kraftstoff) das getankt werden kann festgelegt. Der höchstmögliche anlegbare Druck ist der höchste an Tankstellen verfügbare Zapfdruck für das jeweilige Medium. Beim Befüllvorgang strömt das Medium durch ein Filter 29 und ein Rückschlagventil 28 in die hier axial angeordnete Einlassöffnung 10 des für 350 Bar Sperrdruck ausgelegten Sperrventils SV. Von der Auslassöffnung 11 des Sperrventils SV gelangt das Medium nunmehr mit einem maximalen Druck von 350 Bar über eine Druckleitung 66 und über einen ersten Speicherventilblock 50 (der ein zusätzliches Sicherheitsventil und/oder einen Druckregler zur Entnahme von Medium aufweisen kann) in einen Druckspeicherbehälter S, der einen zulässigen Betriebsdruck von 350 Bar aufweist. Durch die Abstimmung des Sperrdrucks (350 Bar) des Sperrventils SV auf den zulässigen Betriebsdruck des Druckspeicherbehälters S und die dauerhaft verbundene Anordnung der Komponenten im Kraftfahrzeug ist ein sicheres Betanken unabhängig vom Zapfdruck der Tankstelle gewährleistet. Die Entnahme von Medium kann außer an dem ersten Speicherventilblock 50 auch an einer anderen Entlahmestelle 155 im Druckspeichersystem erfolgen.

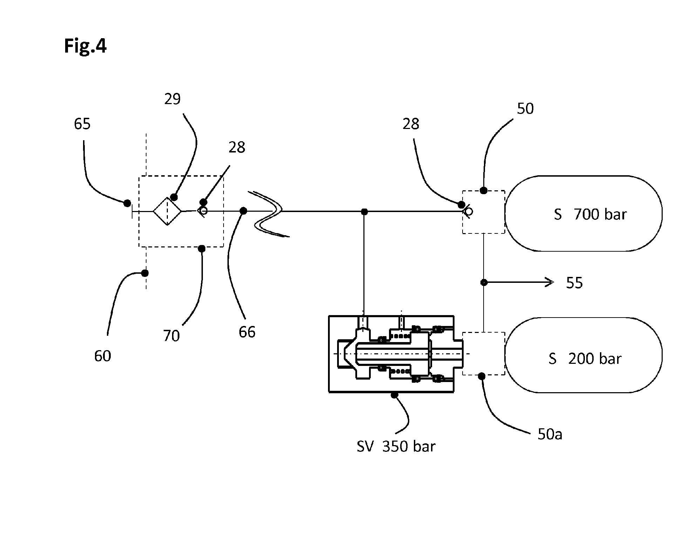

Figur 4 zeigt beispielhaft ein Druckspeichersystem mit einem Sperrventil SV in einer Anwendung mit paralleler Anordnung zweier Druckspeicherbehälter S und Positionierung des Sperrventils SV vor einem zweiten Speicherventilblock 50a. Die Tankstutzeneinheit 70 (entsprechend dem Stand der Technik) ist eingebaut in einer Karosserie 60 eines Kraftfahrzeugs und weist einen Tankstutzen 65 auf. Beim Befüllvorgang strömt das Medium durch ein Filter 29 und ein Rückschlagventil 28 in die verzweigte Druckleitung 66. Ein Zweig der Druckleitung 66 führt über einen ersten Speicherventilblock 50 mit eingebautem Rückschlagventil 28 in einen Druckspeicherbehälter S mit 700 bar zulässigem Fülldruck. Zur Entnahme von Medium weist der erste Speicherventilblock 50 einen Druckregler auf. Der andere Zweig führt in eine hier radial angeordnete Einlassöffnung 10 eines für 200 bar Sperrdruck ausgelegten Sperrventils SV. Von der Auslassöffnung 11 des Sperrventils SV gelangt Medium nunmehr mit einem maximalen Druck von 200 bar über einen zweiten Speicherventilblock 50a, der ebenfalls einen Druckregler zur Entnahme von Medium aufweist, in einen für 200 bar zulässigen Fülldruck ausgelegten zweiten Druckspeicherbehälter S. Durch die Abstimmung des Sperrdrucks (200 Bar) des Sperrventils SV auf den zulässigen Betriebsdruck des zweiten Druckspeicherbehälters S und die dauerhaft verbundene Anordnung der Komponenten im Kraftfahrzeug ist ein sicheres Betanken unabhängig vom Zapfdruck der Tankstelle gewährleistet. Außerdem kann dadurch aus jedem der beiden Druckspeicherbehälter S, trotz unterschiedlicher zulässiger Druckniveaus, unabhängig und gleichzeitig Medium zum Verbraucher geführt werden.

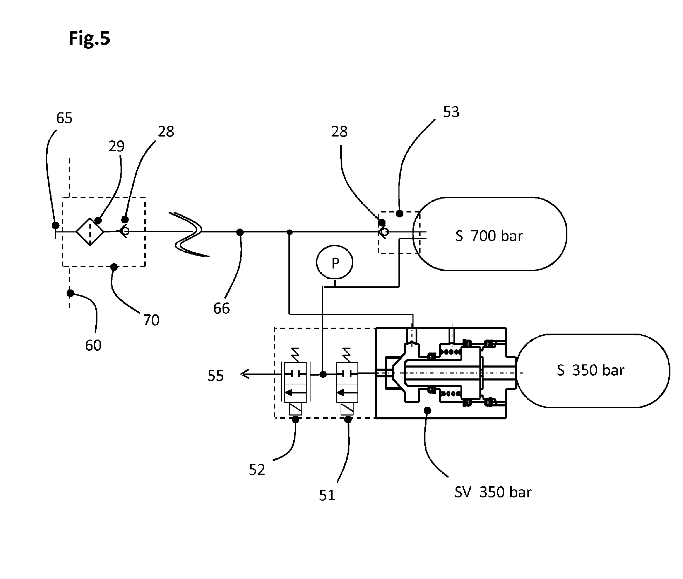

Figur 5•zeigt beispielhaft ein Druckspeichersystem umfassend eine Kombination eines Sperrventils SV mit elektrisch betätigbaren Ventilen in einer Anwendung mit paralleler Anordnung zweier Druckspeicherbehälter S mit unterschiedlichen zulässigen Betriebsdrucken.

Die Tankstutzeneinheit 70 (entsprechend dem Stand der Technik) ist eingebaut in einer Karosserie 60 eines Kraftfahrzeugs und weist einen Tankstutzen 65 auf. Beim Befüllvorgang strömt das Medium durch ein Filter 29 und ein Rückschlagventil 28 in die verzweigte Druckleitung 66.

Ein Zweig der Druckleitung 66 führt über einen ersten Speicherventilblock 53 mit eingebautem Sicherheitsventil und Rückschlagventil 28 in den ersten Druckspeicherbehälter S mit 700 bar zulässigem Fülldruck. Zur Entnahme von Medium weist der erste Speicherventilblock 53 zusätzlich eine Entnahmeleitung auf, wobei die Entnahmeleitung zu einem Druckregler 52 führt.

Der andere Zweig führt in eine hier radial angeordnete Einlassöffnung 10 eines für 350 bar Sperrdruck ausgelegten Sperrventils SV das mit seiner Auslassöffnung 11 direkt mit einem zweiten Druckspeicherbehälter S mit 350 bar zulässigem Fülldruck verbunden ist. Das in Fig. 5 gezeigte Sperrventil SV weist im Bereich des Dichtkörpers zusätzlich eine Öffnung auf, die mit einem elektrisch betätigbaren Sicherheitsventil 51 verbunden ist. Das elektrisch betätigbare Sicherheitsventil 51 ist hier ein Magnetventil, das elektrisch geöffnet und geschlossen werden kann. Dem elektrisch betätigbaren Sicherheitsventil 51 nachgeschaltet ist ein Druckregler 52. In die Verbindungsleitung zwischen dem elektrisch betätigbaren Sicherheitsventil 51 und dem Druckregler 52 mündet die vom ersten Druckspeicherbehälter S kommende Verbindungsleitung. Diese Verbindungsleitung weist einen Drucksensor P auf. Das elektrisch betätigbare Sicherheitsventil 51 ermöglicht die Entnahme von Medium aus dem zweiten Druckspeicherbehälter S mit 350 bar zulässigem Fülldruck, sobald der Druck in der Verbindungsleitung unter den Sperrdruck des Sperrventils SV gesunken ist.

Eine weitere nicht in den Figuren dargestellte Variante eines erfindungsgemäßen Sperrventils SV variiert die in Fig. 1 dargestellte Ausführung. Die in der Fig. 1 im Deckel 24 angeordnete Auslassöffnung 11 wird in das Ventilgehäuse 20 fluchtend mit der Bewegungsachse des Kolbens 22 unter dem Dichtkörper 21 verlegt. Der Deckel 24 schließt die Ventilkammer nun ohne die Auslassöffnung dicht ab. Durch eine mit der neuen Auslassöffnung im Ventilgehäuse 20 fluchtende axiale Bohrung im Dichtkörper 21 kann Medium bei geöffnetem Ventilsitz durch die Durchlassöffnung 13 und die axiale Bohrung im Dichtkörper 21 und die neue mit der Bewegungsachse des Kolbens 22 fluchtende Auslassöffnung in einen mit dieser Auslassöffnung fest verbundenen Druckspeicherbehälter S strömen. Der ebenfalls mit der Bewegungsachse des Kolbens 22 fluchtende Verbindungskanal 14 ermöglicht die pneumatische oder hydraulische Kommunikation des Mediums mit der zweiten Kolbenwirkfläche A2 und bewirkt ein Schließen des Sperrventils bei Erreichen des vorgegebenen Sperrdrucks. Diese Bauvariante des erfindungsgemäßen Sperrventils kann besonders platzsparend ausgeführt werden.

Bei allen Ausführungsformen , in denen ein Dichtkörper 21 verwendet wird, muss der Dichtkörper 21 zum Ventilgehäuse 20 aus Sicherheitsgründen abgedichtet werden, damit keine zusätzlichen Kräfte entstehen und auf die Dichtfläche des Dichtkörpers wirken können.

Alle angegebenen Druckwerte sind beispielhaft und führen zu keiner Einschränkung der Erfindung und des Druckbereiches für den die Erfindung beansprucht wird.

### Bezugszeichenliste

- 10: Zulauföffnung
- 11: Auslassöffnung
- 12: Entlastungsöffnung
- 13: Durchlassöffnung
- 14: Verbindungskanal
- 15,15a: Entnahmekanal
- 16: Kanal
- 17: Ventilkammer Einlassbereich
- 18: Ventilkammer Entlastungsbereich
- 19: Ventilkammer Speicherbereich
- 20: Ventilgehäuse
- 21: Dichtkörper
- 22: Kolben
- 23: Feder
- 24: Deckel
- 25: Distanzhalter
- 26: Ventilgehäuse
- 27: Ventilaufnahmeblock
- 28: Rückschlagventil
- 29: Filter
- 31: Stellfeder
- 32: Feder-Fixierschraube
- 33,34: Verschlusselemente
- 35: Klemmschraube
- 36: Überdruckventil
- 37,38: Gleitflächen
- 39: Dichtkante
- 41,42,43: Dichtelemente
- 50,50a: Erster und Zweiter Speicherventilblock mit Druckregler
- 51: Elektrisches Sicherheitsventil
- 52: Druckregler
- 53: Speicherventilblock mit Sicherheitsventil
- 55: Druckleitung zum Verbraucher
- 60: Kraftfahrzeugkarosserie
- 65: Tankstutzen (Stand der Technik)
- 66,67: Druckleitung
- 70: Tankstutzeneinheit (Stand der Technik)
- 110: Neuartige Tankstutzeneinheit eingebaut
- 155: Entnahmestelle
- A1,A2: Erste und Zweite Kolbenwirkflächen
- A3: Auflage
- D1,D4: Innendurchmesser Verbindungskanal
- D2,D3: Außendurchmesser Kolbenteilabschnitte
- L1: Gesamtlänge Kolben
- L2,L3: Länge Kolbenteilabschnitte
- P: Drucksensor
- S: Druckspeicherbehälter
- SV: **S**perr**v**entil

## Patentansprüche

1. Sperrventil für einen Druckspeicherbehälter (S) für ein Medium, wobei das Sperrventil ein Ventilgehäuse (20), eine Ventilkammer mit einer Zulauföffnung (10) und einer dem Druckspeicherbehälter (S) zugewandten Auslassöffnung (11), einen beweglichen Kolben (22), und zumindest eine Feder (23) aufweist,
wobei der Kolben (22) zumindest einen axialen Verbindungskanal (14) aufweist und durch zumindest zwei in der Ventilkammer angeordnete Dichtelemente (41,42) axial beweglich geführt ist, wobei eine einem Einlassbereich (17) der Ventilkammer zugewandte erste Kolbenwirkfläche (A1) des Kolbens (22) und ein Dichtkörper (21) oder das Ventilgehäuse (20) einen Ventilsitz bilden, und wobei durch Änderung des Druckes in einem an eine zweite Kolbenwirkfläche (A2) angrenzenden Speicherbereich (19) der Ventilkammer der Kolben (22) axial bewegbar ist und eine zwischen der Zulauföffnung (10) und der Auslassöffnung (11) angeordnete Durchlassöffnung (13) reversibel verschlossen und geöffnet werden kann, wobei die Durchlassöffnung (13) in drucklosem Zustand durch die Feder (23) offen gehalten wird, **dadurch gekennzeichnet, dass** die erste Kolbenwirkfläche (A1) und der Dichtkörper (21) so ausgebildet sind, dass in einer Schließposition des Kolbens (22) eine Dichtwirkung an einer Dichtkante (39) im Bereich des äußeren Randes der ersten Kolbenwirkfläche (A1) auftritt, wobei die Zulauföffnung (10) radial außerhalb der Kolbenwirkfläche (A1) in den Einlassbereich (17) der Ventilkammer mündet.

2. Sperrventil nach Anspruch 1,
**dadurch gekennzeichnet, dass**
die zweite Kolbenwirkfläche (A2) grösser ist als die erste Kolbenwirkfläche (A1).

3. Sperrventil nach zumindest einem der vorhergehenden Ansprüche,
**dadurch gekennzeichnet, dass**
die zumindest zwei Dichtelemente (41,42) in entsprechenden Ausnehmungen im Ventilgehäuse (20) angeordnet sind.

4. Sperrventil nach zumindest einem der vorhergehenden Ansprüche,
**dadurch gekennzeichnet, dass**
der Dichtkörper (21) und/oder der Kolben (22) aus einem elastisch verformbaren Material hergestellt sind.

5. Sperrventil nach zumindest einem der vorhergehenden Ansprüche,
**dadurch gekennzeichnet, dass**
ein Entlastungsbereich (18) der Ventilkammer zwischen den zumindest zwei Dichtelementen (41,42) eine Entlastungsöffnung (12) aufweist.

6. Sperrventil nach Anspruch 4,
**dadurch gekennzeichnet, dass**
die Entlastungsöffnung (12) mit einer Leitung zur Entsorgung von austretendem Medium verbunden ist.

7. Sperrventil nach zumindest einem der vorhergehenden Ansprüche,
**dadurch gekennzeichnet, dass**
der Sperrdruck des Sperrventils im Wesentlichen durch die Federkraft der Feder (23) und die Kolbenwirkflächen (A1, A2) bestimmt ist.

8. Sperrventil nach zumindest einem der vorhergehenden Ansprüche,
**dadurch gekennzeichnet, dass**
die Federkraft der Feder (23) über die Einschraubtiefe eines Deckels (24) einstellbar ist.

9. Sperrventil nach zumindest einem der vorhergehenden Ansprüche,
**dadurch gekennzeichnet, dass**
ein Distanzhalter (25) am Deckel (24) oder entsprechende Freistellungen an der zweiten Kolbenwirkfläche (A2) des Kolbens (22) vorgesehen sind.

10. Sperrventil nach zumindest einem der vorhergehenden Ansprüche,
**dadurch gekennzeichnet, dass**
das Ventilgehäuse (20) an dem die Auslassöffnung (11) aufweisenden Ende zumindest teilweise in eine Öffnung des Druckspeicherbehälters (S) hineinragt und dauerhaft mit dem Druckspeicherbehälter (S) verbunden ist.

11. Sperrventil nach zumindest einem der vorhergehenden Ansprüche,
**dadurch gekennzeichnet, dass**
die Auslassöffnung (11) über einen Ventilaufnahmeblock (27) oder über einen zumindest ein zusätzliches Ventil aufweisenden Speicherventilblock (50) mit dem Druckspeicherbehälter (S) verbindbar ist.

12. Sperrventil nach zumindest einem der vorhergehenden Ansprüche,
**dadurch gekennzeichnet, dass**
zwischen dem Auslassbereich (19) und dem Entlastungsbereich (18) ein Überdruckventil (36) angeordnet ist, dessen Öffnungsdruck über dem Sperrdruck des Drucksperrventiles liegt.

13. Druckspeichersystem für ein Fahrzeug, umfassend zumindest einen Druckspeicherbehälter (S) und zumindest ein damit wirkverbundenes Sperrventil nach zumindest einem der vorhergehenden Ansprüche.

## Claims

1. Sealing valve for a pressure storage container (S) for a medium, wherein the sealing valve has a valve housing (20) a valve chamber with an intake opening (10) and an outlet opening (11) facing the pressure accumulator vessel (S), a movable piston (22), and at least one spring (23), wherein the piston (22) has at least one axial connecting channel (14) and is guided in an axially movable manner by at least two sealing elements (41, 42) arranged in the valve chamber, wherein a first effective piston surface (A1) of the piston (22), said first effective piston surface facing an inlet region (17) of the valve chamber, and a sealing body (21) or the valve housing (20) form a valve seat, and wherein, by changing the pressure in an accumulator region (19) of the valve chamber, said accumulator region being adjacent to a second effective piston surface (A2), the piston (22) is axially movable and a passage opening (13) arranged between the intake opening (10) and the outlet opening (11) can be reversibly closed and opened, wherein, in the unpressurized state, the passage opening (13) is kept open by the spring (23), **characterized in that** the first effective piston surface (A1) and the sealing body (21) are designed in such a manner that, in a closed position of the piston (22), a sealing effect occurs at a sealing edge (39) in the region of the outer border of the first effective piston surface (A1), wherein the intake opening (10) opens radially outside the effective piston surface (A1) into the inlet region (17) of the valve chamber.

2. Sealing valve according to Claim 1, **characterized in that** the second effective piston surface (A2) is larger than the first effective piston surface (A1).

3. Sealing valve according to at least one of the preceding claims, **characterized in that** the at least two sealing elements (41, 42) are arranged in corresponding recesses in the valve housing (20).

4. Sealing valve according to at least one of the preceding claims, **characterized in that** the sealing body (21) and/or the piston (22) are/is produced from an elastically deformable material.

5. Sealing valve according to at least one of the preceding claims, **characterized in that** a relief region (18) of the valve chamber between the at least two sealing elements (41, 42) has a relief opening (12).

6. Sealing valve according to Claim 4, **characterized in that** the relief opening (12) is connected to a line for disposing of emerging medium.

7. Sealing valve according to at least one of the preceding claims, **characterized in that** the sealing pressure of the sealing valve is substantially determined by the spring force of the spring (23) and the effective piston surfaces (A1, A2).

8. Sealing valve according to at least one of the preceding claims, **characterized in that** the spring force of the spring (23) is adjustable via the screw-in depth of a cover (24).

9. Sealing valve according to at least one of the preceding claims, **characterized in that** spacers (25) are provided on the cover (24) or corresponding recesses are provided on the second effective piston surface (A2) of the piston (22).

10. Sealing valve according to at least one of the preceding claims, **characterized in that** the valve housing (20) at least partially projects at the end having the outlet opening (11) into an opening in the pressure storage container (S) and is permanently connected to the pressure storage container (S).

11. Sealing valve according to at least one of the preceding claims, **characterized in that** the outlet opening (11) is connectable to the pressure storage container (S) via a valve-receiving block (27) or via an accumulator valve block (50) having at least one additional valve.

12. Sealing valve according to at least one of the preceding claims, **characterized in that** a pressure control valve (36), the opening pressure of which lies above the sealing pressure of the pressure sealing valve, is arranged between the outlet region (19) and the relief region (18).

13. Pressure storage system for a vehicle, comprising at least one pressure storage container (S) and at least one sealing valve, which is operatively connected thereto, according to at least one of the preceding claims.

## Revendications

1. Clapet antiretour pour un réservoir d'accumulation de pression (S) pour un fluide, le clapet antiretour présentant un boîtier de clapet (20), une chambre de clapet avec une ouverture d'alimentation (10) et une ouverture de sortie (11) tournée vers le réservoir d'accumulation de pression (S), un piston mobile (22) et au moins un ressort (23),
le piston (22) présentant au moins un canal de liaison axial (14) et étant guidé de manière déplaçable axialement par au moins deux éléments d'étanchéité (41, 42) disposés dans la chambre de clapet, une première surface active de piston (A1) du piston (22) tournée vers une région d'entrée (17) de la chambre de clapet et un corps d'étanchéité (21) ou le boîtier de clapet (20) formant un siège de clapet, et par variation de la pression dans une région d'accumulation (19) de la chambre de clapet adjacente à une deuxième surface active de piston (A2), le piston (22) pouvant être déplacé axialement et une ouverture de passage (13) disposée entre l'ouverture d'alimentation (10) et l'ouverture de sortie (11) pouvant être fermée et ouverte de manière réversible,
l'ouverture de passage (13), dans l'état sans pression, étant maintenue ouverte par le ressort (23), **caractérisé en ce que**
la première surface active de piston (A1) et le corps d'étanchéité (21) sont réalisés de telle sorte que dans une position de fermeture du piston (22), un effet d'étanchéité agisse au niveau d'une arête d'étanchéité (39) dans la région du bord extérieur de la première surface active de piston (A1), l'ouverture d'alimentation (10) débouchant radialement à l'extérieur de la surface active de piston (A1) dans la région d'entrée (17) de la chambre de clapet.

2. Clapet antiretour selon la revendication 1,
**caractérisé en ce que**
la deuxième surface active de piston (A2) est supérieure à la première surface active de piston (A1).

3. Clapet antiretour selon au moins l'une quelconque des revendications précédentes,
**caractérisé en ce que**
les au moins deux éléments d'étanchéité (41, 42) sont disposés dans des évidements correspondants dans le boîtier de clapet (20).

4. Clapet antiretour selon au moins l'une quelconque des revendications précédentes,
**caractérisé en ce que**
le corps d'étanchéité (21) et/ou le piston (22) sont fabriqués en un matériau déformable élastiquement.

5. Clapet antiretour selon au moins l'une quelconque des revendications précédentes,
**caractérisé en ce**
**qu'**une région de détente (18) de la chambre de clapet entre les au moins deux éléments d'étanchéité (41, 42) présente une ouverture de détente (12).

6. Clapet antiretour selon la revendication 4,
**caractérisé en ce que**
l'ouverture de détente (12) est connectée à une conduite d'évacuation de fluide sortant.

7. Clapet antiretour selon au moins l'une quelconque des revendications précédentes,
**caractérisé en ce que**
la pression de blocage du clapet antiretour est déterminée essentiellement par la force de ressort du ressort (23) et par les surfaces actives de piston (A1, A2).

8. Clapet antiretour selon au moins l'une quelconque des revendications précédentes,
**caractérisé en ce que**
la force de ressort du ressort (23) peut être ajustée par le biais de la profondeur de vissage d'un couvercle (24).

9. Clapet antiretour selon au moins l'une quelconque des revendications précédentes,
**caractérisé en ce**
**qu'**un élément d'espacement (25) est prévu sur le couvercle (24) ou des zones libres correspondantes sont prévues sur la deuxième surface active de piston (A2) du piston (22).

10. Clapet antiretour selon au moins l'une quelconque des revendications précédentes,
**caractérisé en ce que**
le boîtier de clapet (20), au niveau de l'extrémité présentant l'ouverture de sortie (11), pénètre au moins en partie dans une ouverture du réservoir d'accumulation de pression (S) et est connecté de manière durable au réservoir d'accumulation de pression (S).

11. Clapet antiretour selon au moins l'une quelconque des revendications précédentes,
**caractérisé en ce que**
l'ouverture de sortie (11) peut être connectée au réservoir d'accumulation de pression (S) par le biais d'un bloc de réception de clapet (27) ou par le biais d'un bloc de clapet accumulateur (50) présentant au moins un clapet supplémentaire.

12. Clapet antiretour selon au moins l'une quelconque des revendications précédentes,
**caractérisé en ce**
**qu'**entre la région de sortie (19) et la région de détente (18) est disposé un clapet de surpression (36) dont la pression d'ouverture est située au-dessus de la pression de blocage du clapet antiretour de pression.

13. Système d'accumulation de pression pour un véhicule, comprenant au moins un réservoir d'accumulation de pression (S) et au moins un clapet antiretour connecté fonctionnellement à celui-ci selon au moins l'une quelconque des revendications précédentes.
